# EUROPEAN PATENT SPECIFICATION

(11) **EP 0 475 769 B1**
(45) Date of publication and mention of the grant of the patent: **02.01.1997**
(21) Application number: 91308352.3
(22) Date of filing: 12.09.1991
(51) Int. Cl.: E03F 3/06, F16L 55/165, F16L 58/10

(54) **Method of renovating and/or protecting sewers or pipes**
Verfahren zur Erneuerung und/oder zum Schutz von Abwassernkanälen oder Röhren
Procédé pour restaurer et/ou protéger des égouts ou tuyaux

(30) Priority: 13.09.1990 AU 2300/90
(43) Date of publication of application: 18.03.1992
(73) Proprietor: DANBY PTY LTD, Rocklea Queensland 4106 (AU)
(72) Inventor: Molyneux, Sydney, Macgregor, Queensland 4109 (AU)
(74) Representative: Lawrence, Malcolm Graham

(56) References cited:
- WO-A-88/03598
- WO-A-88/05884
- DE-A- 3 418 605
- DE-A- 3 700 883
- GB-A- 2 079 805

## Description

This invention relates to a method of renovating and/or protecting sewers or pipes, and a liner and means for its introduction into a sewer or pipe.

EP85308548.8 (Patent No 0184366) (Danby Pty Ltd) discloses our "Twin Lok" (Registered Trade Mark) method for relining non-man-entry sewers and pipes (eg up to 900mm diameter), where the liner strip and joiner strip may be wound on the winding machine disclosed in EP88900062.6 (EP-A-0332654) (Danby Ptd Ltd). The methods for relining larger man-entry sewers and pipes are disclosed in EP88901529.3 (EP-A-0355089) and 90307906.9 (EP-A-0450220) (both Danby Ptd Ltd) for our "Panel Lok 2" and "Panel Lok 3" (both Registered Trade Marks) methods, respectively.

While these methods have proved very successful for the relining of annular (and large oval) sewers and pipes, they are not suitable for oval or egg-shaped sewers or pipes, which may be of man-entry size, but which incorporate a radius of curvature (eg at the base) of less than, eg 600mm. This is because it is not possible to bend the semi-rigid UPVC liner and joiner strips through such a small radius of curvature.

From GB-A-2 079 805 a method and a liner and means for its introduction into a sewer or pipe are known having the features of the preambles of the claims 1 and 11 respectively.

As will be appreciated from the preferred embodiment described hereafter the present invention provides a method for relining sewers and pipes of oval, egg-shape or similar shapes.

It is preferred that the liner be formed at one manhole in the sewer or pipe and be fed through the sewer or pipe to the next manhole.

It is also preferred that at least a portion of the liner be placed under tension (along the sewer or pipe) before the liner is grouted into position.

In one of it aspects, the present invention provides a method of renovating and/or protecting sewers or pipes of oval, egg-shape or similar form which method comprises forming a liner for the sewer or pipe in a plurality of successive lengthwise sections and advancing the formed sections of liner into the sewer or pipe, the sections being advanced successively and being locked in edge-to-edge abutting relation; characterized by disposing a former at one end of a section of sewer or pipe to be lined, said former conforming to the internal shape of said sewer or pipe; disposing an elongate base strip in a lower portion of the former, the base strip having respective mouth formations along each longitudinal side; disposing liner strip sections in the former, the liner strip sections being disposed transverse to the base strip and having been preformed to the general shape of a horseshoe in accordance with the internal shape of the sewer or pipe, and engaging the ends of the liner strip sections in the mouth formations of the base strip; locking together the liner strip sections in edge-to-edge abutting relation; the assembled liner being advanced into the sewer or pipe when at least one liner strip section is connected to the base strip; and grouting the assembled liner into the sewer or pipe.

Preferably, the base strips are formed from semi-rigid PVC and may be made in lengths of, eg 100 metres and supplied on coils.

Preferably, the base strip has one or more T-formations on the underside of its body; one or more wires embedded in, and extending along, its body; and the respective mouth formations include at least one tooth to engage the ends of the liner strip sections.

Preferably, the liner strip sections are formed of semi-rigid UPVC, with T-formations directed outwardly on the body and inwardly directed joint formations along the side edges of the body. Preferably, the joint formations of two butted-together liner strip sections are secured together by a joiner strip.

Preferably, the liner strip sections have a transverse groove or slot across the T-formations adjacent each end of the sections, the grooves or slots engaging the respective teeth in the mouth formations of the base strip.

Preferably, the liner strip sections are preformed to the "horseshoe" shape, required to fit the sewer or pipe, by heating in a heated liquid, eg hot wter, bath.

Preferably, the wires in the base strip are placed under tension before the assembled liner is grouted, to increase the strength of the base strip.

The grout is preferably pumped into the cavity between the liner and the sewer or pipe via a grout pipe in the cavity, at the top thereof. The pipe may have a plurality of spaced grout holes which are selectively opened by the movement of an outer sleeve about the grout pipe, the grout flowing down around the liner to fill the cavity.

In a second aspect, the present invention provides a liner and means for its introduction to a sewer or pipe for renovating and/or protecting said sewer or pipe, of an oval, egg shape or similar form which apparatus comprises a former conforming to the internal shape of the sewer or pipe for location at one end of a section of sewer or pipe to be lined an elongate base strip having respective mouth formations (16) along each longitudinal side thereof for disposition in a lower portion of the former; liner strip sections with ends engageable with the mouth formations of the base strip, the liner strip sections being engageable in the former transverse to the base strip, a source of liquid for the application of heat for preforming the liner strip sections to the general shape of a horseshoe in accordance with the internal shape of the sewer or pipe, means to lock adjacent liner strip sections together, said means comprising joint formations along the side edges of the body of the liner strip sections; means to advance the assembled liner into the sewer or pipe; and means to grout the assembled liner into the sewer or pipe.

The invention will now be described with reference to a preferred embodiment, reference being made to the accompanying drawings, in which:-
Fig 1 is an end view showing the assembled liner in the sewer or pipe;
Fig 2 is an end view of the base of the sewer or pipe and the liner;
Fig 3 is an enlarged scale view corresponding to Fig 2;
Fig 4 to 4B show the steps of engagement of the liner strip sections to the base strip;
Fig 5 is a sectional view taken on line 5-5 on Fig 1 of the assembled liner; and
Fig 6 is a view corresponding to Fig 5 of using an alternative liner strip profile and alternative joiner strip profile.

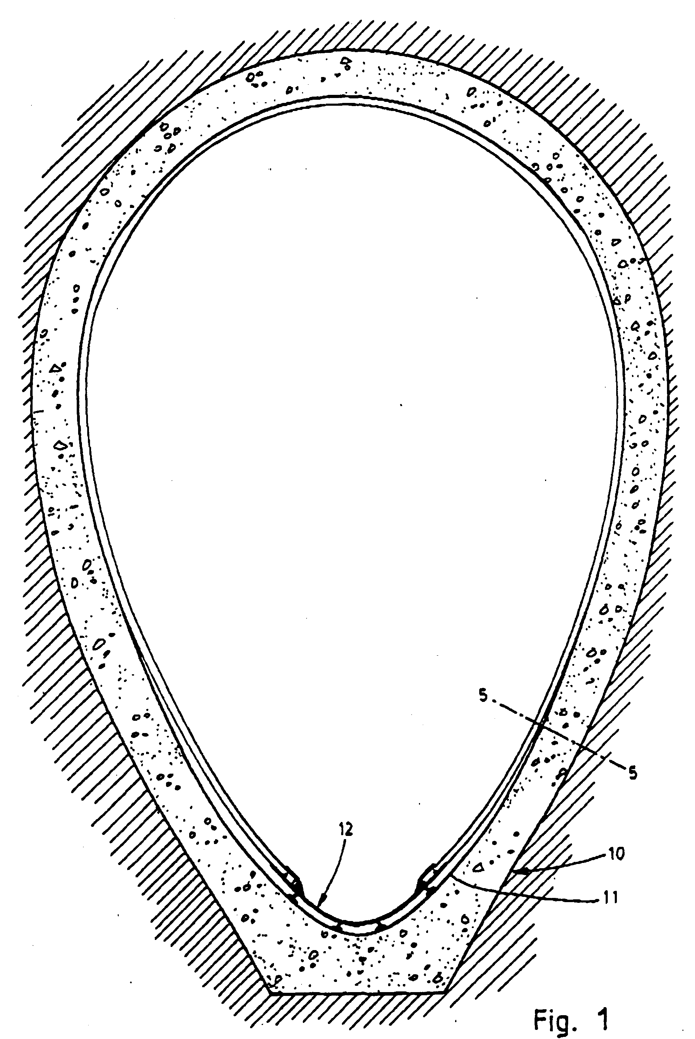

Referring to Fig 1, the sewer or pipe (10) is of generally egg-shaped form.

At one manhole, a former (not shown) is aligned with the sewer or pipe, the former having an internal shape corresponding to, but just smaller than, the inner face (11) of the sewer or pipe.

The base strip (12), extruded from a semi-rigid PVC, is drawn from a supply roll and placed in the base of the former.

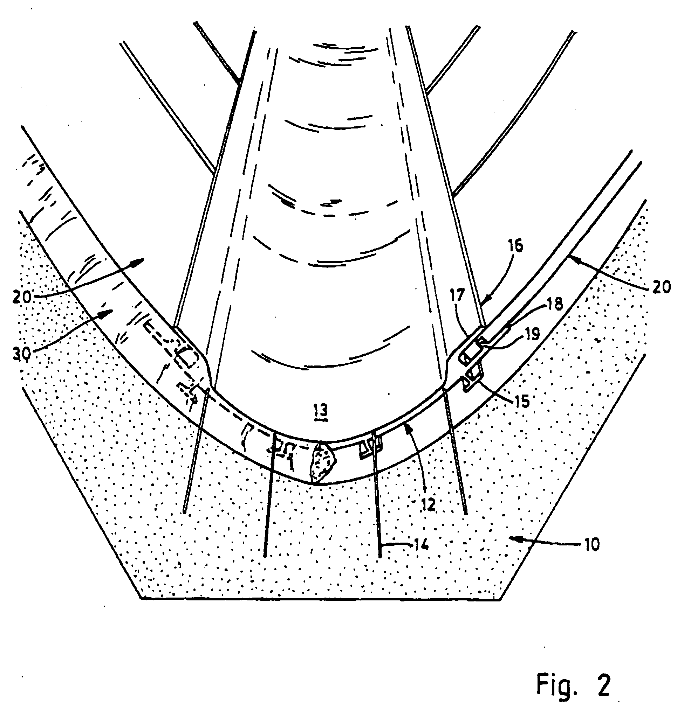

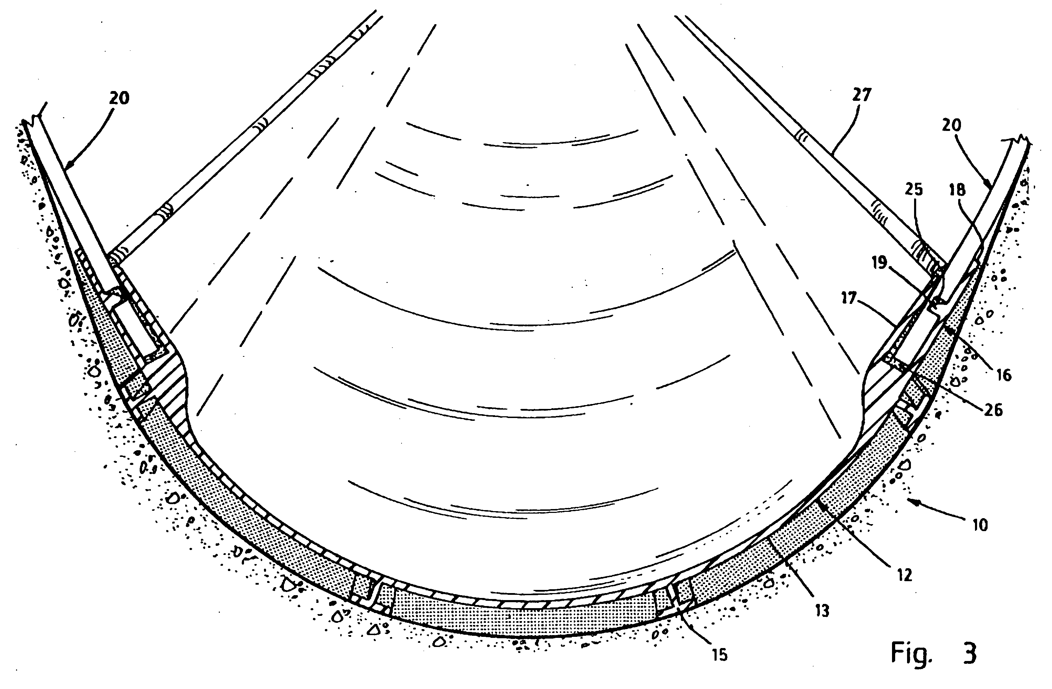

Referring now to Figs 2 and 3, the base strip (12) has a curved (concave) body portion (13), in which are embedded four spaced wires (14). Four spaced T-formations (15) are formed integrally with the body portion (13). A mouth formation (16) is provided along each side of the base strip 12 and each mouth formation 16 has inner and outer lips 17, 18 and an elongate tooth 19.

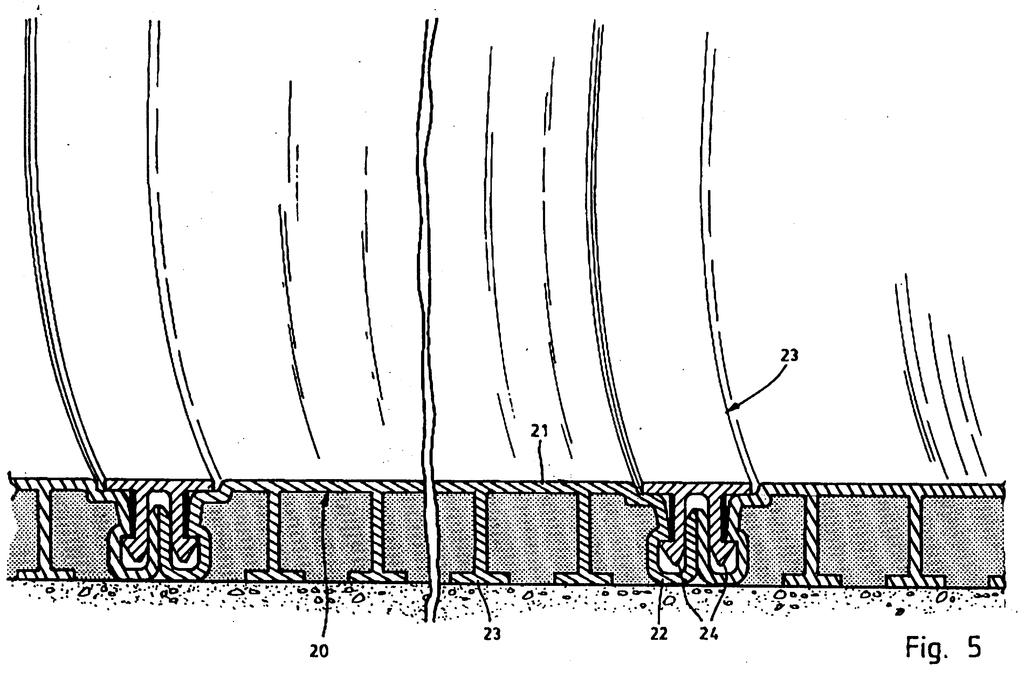

Liner strip sections 20, extruded from semi-rigid UPVC (see Fig 5) have body portions 21, terminated by inwardly directed joint formations 22, with outwardly directed T-formations 24. As shown in Fig 5, adjacent liner strip sections 20 are locked together by an extruded PVC joiner strip 23 with a pair of spaced legs 24 which engage the adjacent joint formations 22. A groove or slot 25 is formed transversely across the ends of the liner strip sections through the T-formations 23.

Liner strip sections 20 are placed in a hot water bath and are preformed into a "horseshoe" shape to match the shape of the sewer or pipe 10.

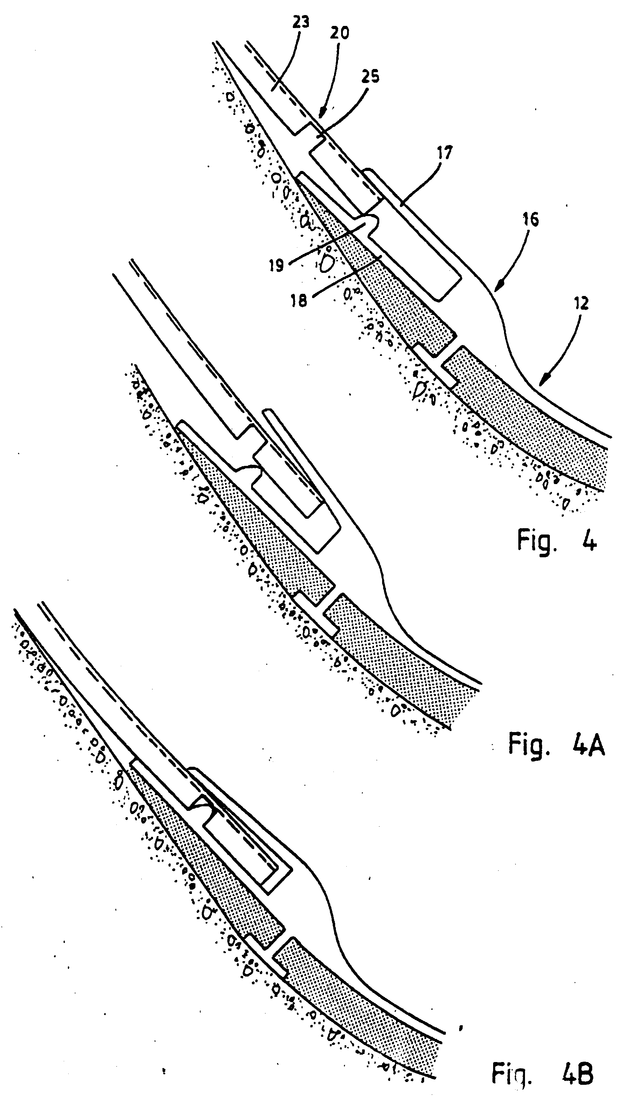

The first liner strip 20 is placed in the former and its ends are engaged with the two mouth formations 16 of the base strip 12, as shown in Figs 4 to 48, where the teeth 19 are engaged in the slots 25. (If preferred, adhesive 26 may be provided in the mouth. formations 16 to secure/seal the ends of the liner strip section 20 in the mouth formations 16.) (The body 21 of the liner strip section 20 may also be welded to the inner lips 17 of the mouth formations 16, as at 27.)

The next liner strip section 20 is placed in the former, is butted against the first liner strip section and is engaged with the base strip 12.

The adjacent liner strip sections 20 are then locked together with a joiner strip 23 (see Fig 5).

The assembled liner is advanced into the sewer or pipe 10 a distance (eg. 300mm) equal to the width of the liner strip section 20, and the next liner strip section 20 is placed in the former and secured to the base strip 12 and adjacent liner strip section 20. The liner assembly is again advanced and the next liner strip section is placed in the former and assembled. The assembled liner may be advanced by pushing it and/or pulling it from the next manhole using a winch attached to the wires 14. When the assembled liner extends from one manhole to the next, the liner is grouted into position.

A grout pipe (not shown) is secured to the top of the inner face 11 of the sewer or pipe 10 before the assembled liner is installed. (This requires a workman to enter and move along the sewer or pipe to install the grout pipe.) The grout pipe may have holes at, eg. 300mm centres along its length and be surrounded by an outer sleeve, which can be withdrawn to selectively open the holes to allow the cementitious grout to flow into the cavity between the liner and the sewer wall.

To increase the strength of the base strip 12, the wires 14 are anchored at the starting manhole and are tensioned by the winch at the next manhole and the interior of the liner may be pressurized with water and/or air.

The grout 30 is pumped along the grout pipe and is selectively allowed to fill the cavity about the liner.

The T-formations 15, 23 on the base strip 12 and liner strip sections 20 ensure that the liner is securely anchored to the sewer or pipe 10. When the grout has set, that section of the sewer or pipe may be re-connected to service.

As the base strip 12 is more flexible than the liner strip section 20, it can be easily formed to fit into sections of the sewer or pipe 10, usually at its base, which have small radii of curvature (eg. less than 600mm). Once the grout pipe has been installed, workmen are not required to enter the sewer or pipe to install the liner, as this is effected at the manholes along the sewer or pipe.

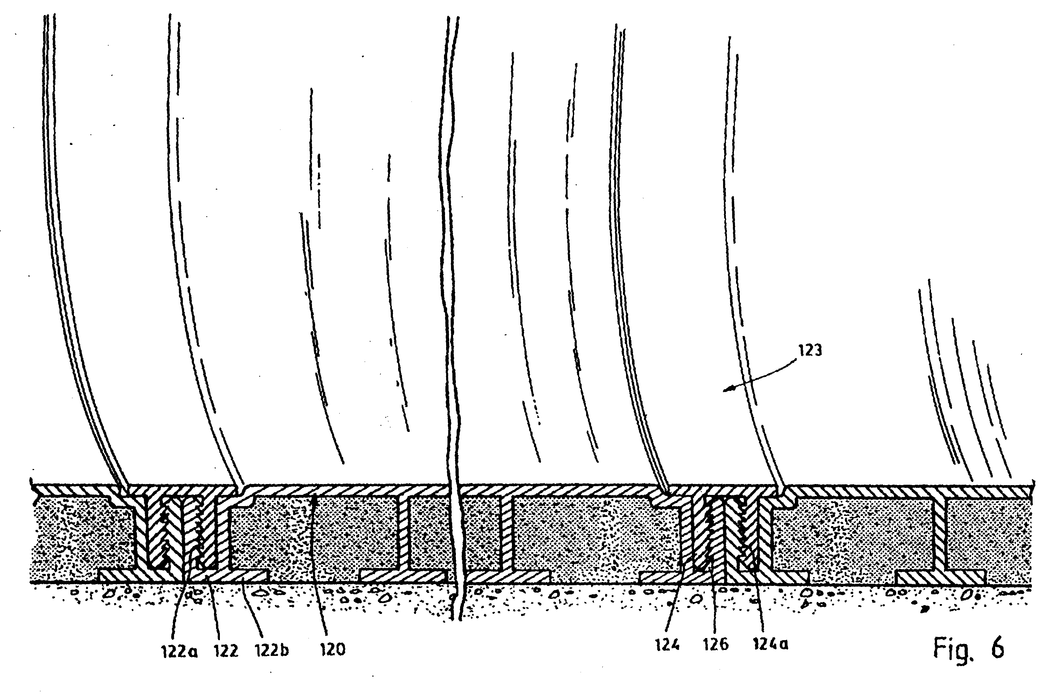

Referring now to Fig 6, modified liner strip sections 120 have inwardly-directed joint formations 122, which have a serrated side wall 122a and a support foot 122b. The modified joiner strips 123 have spaced legs 124 with serrations 124a which engage the serrated side walls 122a of the adjacent liner strip sections 120.

Glue or adhesive 126 may be laid in a bead in the base of the joint formations 122 to seal and lock the legs 124 into the joint formations.

In addition to oviform and egg-shaped sewers or pipes, the present method may be used in horseshoe with the cunette sewers or pipes, or rectangular sewers or pipes, when the base strip 12 is configured to conform with the bottom portion of the sewer or pipe wall.

The present invention provides a simple, yet effective method, for relining such sewers and the skilled addressee will quickly appreciate its advantages over the known method, which require the use of preformed, rigid fibreglass panels being placed in the sewer or pipe and locked together, manually.

## Claims

1. A method of renovating and/or protecting sewers or pipes (10) of oval, egg-shape or similar form which method comprises forming a liner (12, 20) for the sewer or pipe in a plurality of successive lengthwise sections and advancing the formed sections of liner (12, 20) into the sewer or pipe (10), the sections being advanced successively and being locked in edge-to-edge abutting relation characterized by disposing a former at one end of a section of sewer or pipe (10) to be lined, said former conforming to the internal shape of said sewer or pipe (10); disposing an elongate base strip (12) in a lower portion of the former, the base strip (12) having respective mouth formations (16) along each longitudinal side; disposing liner strip sections (20) in the former, the liner strip sections (20) being disposed transverse to the base strip (12) and having been preformed to the general shape of a horseshoe in accordance with the internal shape of the sewer or pipe (10), and engaging the ends of the liner strip sections (20) in the mouth formations (16) of the base strip (12); locking together the liner strip sections (20) in edge-to-edge abutting relation; the assembled liner (12, 20) being advanced into the sewer or pipe (10) when at least one liner strip section (20) is connected to the base strip (12); and grouting the assembled liner (12, 20) into the sewer or pipe (10).

2. A method according to claim 1 wherein the base strips (12) are formed from semi-rigid PVC and have in each case one or more T-formations (15) on the underside of the strip (12) body (13 and one or more wires (14) embedded in, and extending along, said body (13) ; and the respective mouth formations (16) include at least one tooth (19) to engage the ends of the liner strip formations (20).

3. A method according to claim 1 or claim 2 wherein the liner strip sections (20) are formed from a semi-rigid PVC body (13), each liner strip section (20) having T-formations (24) directed outwardly of the body (13) and inwardly-directed joint formations (22) along the side edges of the body (13).

4. A method according to claim 3 wherein the joint formations (22) of two butted-together liner strip sections (20) are locked together by a joiner strip (23).

5. A method according to claim 3 wherein each liner strip section (20) includes a transverse groove or slot (25) across the T-formations (25) adjacent the ends of the sections (20), the grooves or slots (25) engaging the respective teeth (19) in the mouth formations (16) of the base strip (12).

6. A method according to any preceding claim wherein the liner strip sections (20) are pre-formed to the shape of the former by heating in a hot-liquid bath.

7. A method according to claim 2 wherein the wires (14) in the base strip (12) are connected to a winch at the other end of the section of sewer or pipe (10), the winch hauling the assembled liner (12, 20) to advance it into the sewer or pipe (10).

8. A method according to claim 2 wherein the wires (14) in the base strip (12) are placed under tension, before the assembled liner (12, 20) is grouted, to increase the strength of the base strip (12); and the interior of the assembled liner (12, 20) is pressurized with air and/or water to increase the strength of the liner strip sections (20) as the assembled liner (12, 20) is grouted in the sewer or pipe (10).

9. A method according to any preceding claim wherein the grout is pumped into the cavity between the assembled liner (12, 20) and the sewer or pipe (10) via a grout pipe at the top of the cavity.

10. A method according to claim 9 wherein the grout pipe has a plurality of spaced grout holes which are selectively opened by the movement of an outer sleeve along the grout pipe, the grout flowing down around the assembled liner (12, 20) to fill the cavity.

11. A liner and means for its introduction to a sewer or pipe (10) for renovating and/or protecting said sewer or pipe (10), of an oval, egg shape or similar form having means to advance the assembled liner (12, 20) into the sewer or pipe (10) and means to grout the assembled liner (12, 20) into the sewer or pipe (10) characterised by a former conforming to the internal shape of the sewer or pipe (10) for location at one end of a section of sewer or pipe (10) to be lined, an elongate base strip (12) having respective mouth formations (16) along each longitudinal side thereof for disposition in a lower portion of the former liner strip sections (20) with ends engageable with the mouth formations (16) of the base strip (12), the liner strip sections (20) being engageable in the former transverse to the base strip (12), a source of liquid for the application of heat for preforming the liner strip sections (20) to the general shape of a horseshoe in accordance with the internal shape of the sewer or pipe (10) and means to lock adjacent liner strip sections (20) together, said means comprising joint formations along the side edges of the body of the liner strip sections (20).

## Patentansprüche

1. Verfahren zur Erneuerung und/oder zum Schutz von Abwasserkanälen oder Rohren (10) von ovaler, eiförmiger oder ähnlicher Gestalt, bei dem eine Auskleidung (12, 20) für den Abwasserkanal oder das Rohr durch eine Vielzahl von aufeinanderfolgenden Längsabschnitten gebildet wird, und die gebildeten Sektionen der Auskleidung (12, 20) in dem Abwasserkanal oder das Rohr (10) vorwärtsbewegt werden, wobei die Sektionen aufeinanderfolgend verschoben und in einer Kante-an-Kante anstoßenden Verbindung miteinander verbunden werden, gekennzeichnet durch Anordnung eines Formteils an einem Ende eines Abschnitts eines auszukleidenden Abwasserkanals oder Rohres (10), wobei das Formteil der inneren Form des Abwasserkanals oder Rohres (10) angepaßt ist, Anordnen eines länglichen Basisstreifens (12) an einer unteren Stelle des Formteils, wobei der Basisstreifen (12) entsprechende Mündungsformationen (16) entlang jeder Längsseite aufweist, Anordnen von Streifenabschnitten (20) der Auskleidung in dem Formteil, wobei die Steifenabschnitte (20) der Auskleidung quer zum Basistreifen (12) angeordnet sind und allgemein in Form eines Hufeisens entsprechend der inneren Form des Abwasserkanals oder Rohres (10) vorgeformt wurden, Einsetzen der Enden der Streifenabschnitte (20) der Auskleidung in die Mündungsformationen (16) des Basisstreifens (12), Verbinden der Streifenabschnitte der Auskleidung, wobei ihre Kanten aneinander anstoßen, und die zusammengesetzte Auskleidung (12, 20) in den Abwasserkanal oder das Rohr (10) eingeschoben wird, wenn wenigstens ein Streifenabschnitt (20) der Auskleidung mit dem Basisstreifen (12) verbunden ist, und Vermörteln der zusammengesetzten Auskleidung (12, 20) in den Abwasserkanal oder dem Rohr (10).

2. Verfahren nach Anspruch 1, bei dem die Basisstreifen (12) aus halbfestem PVC gebildet sind und in jedem Fall ein oder mehrere T-Ausbildungen (15) an der Unterseite des Streifen (12)-Körpers (13) angeordnet und ein oder mehrere Drähte (14) in den Körper (13) eingebettet sind und sich längs darin erstrecken, und die entsprechenden Mündungsformationen (16) wenigstens einen Zahn (19) enthalten, der in die Enden der Streifenformationen (20) der Auskleidung eingreift.

3. Verfahren nach Anspruch 1 oder 2, bei dem die Streifenabschnitte (20) der Auskleidung aus einem halbfesten PVC-Körper (13) bestehen, wobei jeder Streifenabschnitt (20) der Auskleidung T-Formationen (24) enthält, die vom Körper (13) nach Außen gerichtet sind, und Verbindungsformationen (22) entlang der Seitenkanten des Körpers (13), die nach Innen gerichtet sind.

4. Verfahren nach Anspruch 3, bei dem die Verbindungsformationen (22) von zwei aneinanderstoßenden Streifenabschnitten (20) der Auskleidung durch einen Verbindungsstreifen (23) gekoppelt sind.

5. Verfahren nach Anspruch 3, bei dem jeder Streifenabschnitt (20) der Auskleidung eine querverlaufende Vertiefung oder einen Spalt (25) über die T-Formationen (24) an den Enden der Abschnitte (20) enthält, wobei die Vertiefungen oder Spalten (25) in die entsprechenden Zähne (19) der Mündungsformationen (16) des Basisstreifens (12) eingreifen.

6. Verfahren nach einem der vorhergehenden Ansprüche, bei dem die Streifenabschnitte (20) der Auskleidung an die Form des Formteils durch Erhitzen im heißen Flüssigkeitsbad vorgeformt sind.

7. Verfahren nach Anspruch 2, bei dem die Drähte (40) in dem Basisstreifen (12) mit einer Winde am anderen Ende des Abschnitts eines Abwasserkanals oder Rohres (10) verbunden sind, wobei die Winde die zusammengesetzte Auskleidung (12, 20) so vorwärtsbewegt, daß sie in den Abwasserkanal oder das Rohr (10) eingeführt wird.

8. Verfahren nach Anspruch 2, bei dem die Drähte (14) in dem Basisstreifen (12) unter Spannung gesetzt werden, bevor die zusammengesetzte Auskleidung (12, 20) vermörtelt wird, um die Festigkeit des Basisstreifens (12) zu erhöhen, und das Innere der zusammengesetzten Auskleidung (12, 20) mit Luft und/oder Wasser unter Druck gesetzt wird, um die Festigkeit der Streifenabschnitte (20) der Auskleidung zu erhöhen, während die zusammengesetzte Auskleidung (12, 20) in dem Abwasserkanal oder Rohr (10) vermörtelt wird.

9. Verfahren nach einem der vorhergehenden Ansprüche, bei dem Mörtel in den Hohlraum zwischen der zusammengesetzten Auskleidung (12, 20) und dem Abwasserkanal oder Rohr (10) über ein Mörtelrohr an der Oberseite des Hohlraums eingepumpt wird.

10. Verfahren nach Anspruch 9, bei dem das Mörtelrohr eine Vielzahl von beabstandeten Mörtellöchern enthält, die selektiv durch Bewegung einer äußeren Hülse entlang des Zementrohres geöffnet werden können, wobei der Mörtel nach unten um die zusammengesetzte Auskleidung (12, 20) fließt, um den Hohlraum aufzufüllen.

11. Eine Auskleidung und Mittel zu ihrem Einsetzen in einen Abwasserkanal oder ein Rohr (10) zur Erneuerung und/oder zum Schutz des Abwasserkanals oder Rohres (10) mit einer ovalen, eiförmigen oder ähnlichen Form, die Mittel zum Vorwärtsbewegen der zusammengesetzten Auskleidung (12, 20) in den Abwasserkanal oder das Rohr (10) und Mittel zum Vermörteln der zusammengesetzten Auskleidung (12, 20) in dem Abwasserkanal oder dem Rohr (10) enthält, gekennzeichnet durch ein Formteil, das der inneren Form des Abwasserkanals oder Rohres (10) angepaßt ist, um an einem Ende eines Abschnitts des Abwasserkanals oder Rohrs (10), das ausgekleidet werden soll, einen länglichen Basisstreifen (12) anzuordnen, der entsprechende Mündungsformationen (16) entlang jeder Längsseite zur Anordnung in einem unteren Bereich des Formteils enthält, durch Streifenabschnitte (20) der Auskleidung mit Enden, die in die Mündungsformationen (16) des Basisstreifens (12) eingreifen können, wobei die Streifenabschnitte (20) der Auskleidung in dem Formteil quer zum Grundstreifen (12) einsetzbar sind, mit einer Flüssigkeitsquelle für die Aufbringung von Hitze zur Vorformung der Streifensektionen (20) der Auskleidung, um diese in die allgemeine Form eines Hufeisens gemäß der inneren Form des Abwasserkanals oder Rohres (10) zu bringen, und durch Mittel, um aufeinanderfolgende Streifenabschnitte (20) der Auskleidung zusammenzuführen, wobei die Mittel Verbindungsformationen entlang der Seitenkanten des Körpers der Streifenabschnitte (20) der Auskleidung enthalten.

## Revendications

1. Procédé de rénovation et/ou de protection d'égouts ou de tuyaux (10) de forme ovale ou en oeuf ou similaire, lequel procédé comprend la formation d'une doublure (12, 20) pour l'égout ou le tuyau en une pluralité de sections longitudinales successives et l'avance des sections formées de doublure (12, 20) dans l'égout ou le tuyau (10), les sections étant avancées successivement et étant verrouillées en relation de butée bord à bord, caractérisé par la disposition d'un gabarit à une extrémité d'une section d'égout ou de tuyau (10) à doubler, ledit gabarit ayant la forme interne dudit égout ou tuyau (10), la disposition d'une bande de base allongée (12) dans la partie inférieure du gabarit, la bande de base (12) ayant des formations (16) en bouche respectives le long de chaque bord longitudinal, la disposition des sections de bande de doublure (20) dans le gabarit, les sections (20) de bande de doublure étant disposées transversalement à la bande de base (12) et ayant été préformées à la forme générale d'un fer à cheval en fonction de la forme intérieure de l'égout ou tuyau (10), et coopérant avec les extrémités des sections de bande de doublure (20) dans les formations (16) en bouche de la bande de base (12), le verrouillage entre elles des sections de bande de doublure (20) en relation de butée bord à bord, la doublure (12, 20) assemblée étant avancée dans l'égout ou tuyau (10) lorsqu'au moins une section (20) de bande de doublure est reliée à la bande de base (12), et le scellement de la doublure (12, 20) assemblée dans l'égout ou tuyau (10).

2. Procédé selon la revendication 1, dans lequel les bandes de base (12) sont formées de PVC semi-rigide et ont, dans chaque cas, une ou plusieurs formations en T (15) sur le côté inférieur du corps (13) de bande (12) et un ou plusieurs câbles (14) noyés à l'intérieur, et s'étendant le long dudit corps (13) ; et les formations en bouche respectives (16) incluent au moins une dent (19) pour coopérer avec les extrémités des formations de bande de doublure (20).

3. Procédé selon la revendication 1 ou 2, dans lequel les sections de bande de doublure (20) sont formées d'un corps (13) de PVC semi-rigide, chaque section de bande de doublure (20) ayant des formations en T (24) dirigées vers l'extérieur du corps (13) et des formations de joint (22) dirigées vers l'intérieur le long des bords latéraux du corps (13).

4. Procédé selon la revendication 3, dans lequel les formations de joint (22) de deux sections (20) de bande de doublure en butée l'une contre l'autre sont verrouillées ensemble par une bande de joint (23).

5. Procédé selon la revendication 3, dans lequel chaque section de bande de doublure (20) inclut une fente ou gorge transversale (25) au travers des formations en T (25) adjacente aux extrémités des sections (20), les fentes ou gorges (25) coopérant avec les dents respectives (19) dans les formations en bouche (16) de la bande de base (12).

6. Procédé selon l'une quelconque des revendications précédents, dans lequel les sections de bande de doublure (20) sont préformées à la forme du gabarit par chauffage dans un bain de liquide chaud.

7. Procédé selon la revendication 2, dans lequel les câbles (14) dans la bande de base (12) sont reliés à un treuil de halage à l'autre extrémité de la section d'égout ou tuyau (10), le treuil de halage tirant la doublure assemblée (12, 20) pour avancer celle-ci dans l'égout ou tuyau (10).

8. Procédé selon la revendication 2, dans lequel les câbles (14) dans la bande de base (12) sont placés sous tension avant que la doublure assemblée (12, 20) soit scellée pour augmenter la résistance de la bande de base (12) ; et l'intérieur de la doublure assemblée (12, 20) est pressurisée avec de l'air et/ou de l'eau pour augmenter la résistance des sections de bande de doublure (20) lorsque la doublure assemblée (12, 20) est scellée dans l'égout ou tuyau (10).

9. Procédé selon l'une quelconque des revendications précédentes, dans lequel le matériau de scellement est pompé dans la cavité entre la doublure assemblée (12, 20) et l'égout ou tuyau (10) via un tuyau de matériau de scellement au sommet de la cavité.

10. Procédé selon la revendication 9, dans lequel le tuyau de matériau de scellement a une pluralité de trous de matériau de scellement espacés qui sont ouverts sélectivement par le mouvement d'un manchon extérieur le long du tuyau de matériau de scellement, le matériau de scellement circulant vers le bas autour de la doublure assemblée (12, 20) pour emplir la cavité.

11. Doublure et moyens pour son introduction dans un égout ou tuyau (10) pour rénover et/ou protéger ledit égout ou tuyau (10), d'une forme ovale, en oeuf ou similaire ayant des moyens pour avancer la doublure assemblée (12, 20) dans l'égout ou tuyau (10) et des moyens pour sceller la doublure assemblée (12, 20) dans l'égout ou tuyau (10), caractérisés par un gabarit conformé à la forme interne de l'égout ou tuyau (10) pour sa disposition à une extrémité d'une section d'égout ou tuyau (10) à doubler, une bande de base allongée (12) ayant des formations en bouche respectives (16) le long de chaque côté longitudinal de celle-ci pour la disposition dans une partie inférieure du gabarit ; des sections de bande de doublure (20) avec des extrémités pouvant coopérer avec les formations en bouche (16) de la bande de base (12), les sections de bande de doublure (20) pouvant coopérer dans le gabarit transversalement à la bande de base (12), une source de liquide pour l'application de chaleur pour préformer les sections de bande de doublure (20) à la forme générale d'un fer à cheval en fonction de la forme intérieure de l'égout ou tuyau (10) et des moyens pour verrouiller ensemble des sections de bande de doublure adjacentes (20), lesdits moyens comprenant des formations de joint le long des bords latéraux du corps des sections de bande de doublure (20).
